**Europäisches Patentamt**

**European Patent Office**

**Office européen des brevets**

(19)

(11) Veröffentlichungsnummer: **0 468 322 A1**

# (12) EUROPÄISCHE PATENTANMELDUNG

(21) Anmeldenummer: **91111704.2**

(22) Anmeldetag: **13.07.91**

(51) Int. Cl.⁵: **B60K 11/08**, B62D 25/10

(30) Priorität: **23.07.90 US 557297**

(43) Veröffentlichungstag der Anmeldung:
**29.01.92 Patentblatt 92/05**

(84) Benannte Vertragsstaaten:
**DE FR GB IT**

(71) Anmelder: **DEERE & COMPANY**
**1 John Deere Road**
**Moline, Illinois 61265(US)**

(72) Erfinder: **Holm, David Roy**
**548 La Belle Avenue**
**Oconomowoc, Wisconsin 53066(US)**

(74) Vertreter: **Feldmann, Bernhard et al**
**DEERE & COMPANY European Office Patent**
**Department Steubenstrasse 36-42**
**W-6800 Mannheim 1(DE)**

(54) **Fahrzeugmotorabdeckung.**

(57) Eine Fahrzeugmotorabdeckung weist eine um eine horizontale Achse aufklappbare Haube mit einem Deckelteil (14) auf, der einstückig in vertikal oder etwa vertikal verlaufende Seitenteile (26) übergeht, wobei mit Abstand zu dem Deckelteil (14) und unter diesem ein horizontal verlaufender und eine Durchtrittsöffnung (24) aufweisender Mittenteil (22) und zwei einen Fahrzeugmotor seitlich abdeckende Seitenverkleidungen (18) vorgesehen sind, die in ihrem oberen Bereich mit dem unteren Bereich der Seitenteile (26) des Deckelteils (14) seitliche Lufteintrittsschlitze bilden, wobei ferner der Mittenteil (22) und die Seitenverkleidungen aus Kunststoff bestehen, einstückig ausgebildet und mit den Seitenteilen (26) des Deckelteils (14) lösbar verbunden sind, und der Mittenteil (22) eine derartige Form aufweist, daß er den Motorraum vollständig abdeckt.

Fig. 3

Rank Xerox (UK) Business Services

Die Erfindung bezieht sich auf eine Fahrzeugmotorabdeckung, die eine um eine horizontale Achse aufklappbare Haube mit einem Deckelteil aufweist, der einstückig in vertikal oder etwa vertikal verlaufende Seitenteile übergeht, wobei mit Abstand zu dem Deckelteil und unter diesem ein horizontal verlaufender und eine Durchtrittsöffnung aufweisender Mittenteil und zwei einen Fahrzeugmotor seitlich abdeckende Seitenverkleidungen vorgesehen sind, die in ihrem oberen Bereich mit dem unteren Bereich der Seitenteile des Deckelteils seitliche Lufteintrittsschlitze bilden.

Gesetzliche Auflagen in vielen Ländern verlangen eine möglichst wirksame Geräuschdämpfung, um die Umwelt so wenig wie möglich zu belasten. Dies trifft auch für Fahrzeuge zu, die in der Garten- und Rasenpflege eingesetzt werden. Hierbei handelt es sich vielfach um kleine Kompakttraktoren mit einem Dieselmotor und einem Bedienungsstand für den Fahrer. Wegen der erforderlichen Geräuschdämpfung aber auch um den Fahrer insbesondere vor Verbrennungen zu schützen, wird der Motor weitgehend gekapselt, wobei infolge der kleinen und gedrängten Bauweise dieser Fahrzeuge das Wiederansaugen von heißer Luft Probleme bereitet.

Bei der Fahrzeugmotorabdeckung, von der die Erfindung ausgeht (US-A-3 987 766) ist dieses Problem weitgehend gelöst, da zwischen dem Mittenteil und dem Deckelteil ein Raum für Frischluft vorgesehen ist, der mit dem Motorraum über die Durchtrittsöffnung Verbindung hat. Bei dieser Abdeckung sind die Seitenverkleidungen jedoch nicht mit dem Deckelteil verbunden und der Mittenteil ist nicht an die Seitenverkleidungen sondern an andere Fahrzeugteile angeschlossen. Um zu verhindern, daß Heißluft in den Frischluftraum gelangt, ist der Mittenteil gegenüber den Seitenverkleidungen über Dichtleisten abgedichtet und noch mit einer vertikalen Stirnplatte versehen, die sich bis unter den Deckelteil erstreckt und gegenüber diesem ebenfalls abgedichtet ist. Um Zugang zu dem Motorraum zu haben, muß der Deckelteil hochgeklappt, die Seitenverkleidungen entfernt und gegebenenfalls der Mittenteil ausgebaut werden, auf dem sich noch ein Brennstofftank befindet. Beim Schließen des Motorraumes ist dafür Sorge zu tragen, daß die an sich kostenaufwendigen und störungsanfälligen Dichtleisten an allen Stellen richtig anliegen, damit der Frischluftraum seiner Aufgabe gerecht wird und keine stirnseitig an der Haube austretende Heißluft angesaugt wird.

Die mit der Erfindung zu lösende Aufgabe wird darin gesehen, die Fahrzeugmotorabdeckung, insbesondere für kleine Kompakttraktoren, vorteilhafter als bisher und in Leichtbauweise auszubilden. Diese Aufgabe ist dadurch gelöst, daß der Mittenteil und die Seitenverkleidungen aus Kunststoff bestehen, einstückig ausgebildet und mit den Seitenteilen des Deckelteils lösbar verbunden sind, wobei der Mittenteil eine derartige Form aufweist, daß er den Motorraum vollständig abdeckt. Auf diese Weise ist ein in die Haube integrierter und sich über die gesamte Haubenlänge erstreckender Frischluftraum geschaffen, der zusammen mit den Seitenverkleidungen hochschwenkbar ist, eine leichte Zugänglichkeit zum Motorraum ermöglicht, den Motorraum vollständig abkapselt, relativ hochliegende Lufteintrittsschlitze aufweist, die einen Heißlufteintritt verhindern, wobei zum Hochschwenken infolge der zumindest teilweise aus Kunststoff hergestellten Teile keine Zusatzeinrichtungen erforderlich sind. Das Hochschwenken kann leicht von Hand erfolgen.

Nach einem weiteren Vorschlag der Erfindung ist auch der Deckelteil aus Kunststoff hergestellt, so daß die gesamte Abdeckung aus Kunststoff, beispielsweise Plastik, besteht. Allerdings ist die Herstellung einer Haube aus Kunststoff, gegebenenfalls bereits in der endgültigen Farbgebung, nicht mehr neu (US-A-3 925 526). Neu ist jedoch das getrennte Gießen von Deckelteil und den Seitenverkleidungen zusammen mit dem Mittenteil, das ein Gießen im Injektionsverfahren zumindest für den Deckelteil mit nur einer Eingußstelle erlaubt. Bekanntlich kann der in die Gußform eingespritzte Plastikkunststoff nur in einem begrenzten Maße fließen und bei großen Stücken müssen mehrere Eingußstellen vorgesehen sein, wobei die dann aufeinanderstoßenden Plastikströme Gußnähte oder andere unerwünschte Fehlstellen entstehen lassen. Zumindest beim Deckelteil entstehen diese unschönen Fehlstellen nicht.

Ferner kann erfindungsgemäß der Deckelteil an seinem der Stirnseite abgelegenem Ende nach oben abgewinkelt ausgebildet werden und in diesem abgewinkelten Bereich mit durch Stege geschützten Lufteinlaßschlitzen versehen sein, die sich bis in die angeformten Seitenteile erstrecken. Durch diese Maßnahmen entsteht zusammen mit den seitlich vorgesehenen Lufteintrittsschlitzen ein optimaler Frischlufteintritt, der es gestattet, daß die Luft mit geringer Geschwindigkeit eingesaugt wird und größere Schmutzpartikel auf den Mittenteil fallen, ohne in das Kühlsystem eingesaugt zu werden. Die besondere Anordnung der Lufteinlaßschlitze im Deckelbereich ermöglicht einen guten Lufteintritt und schließt ein Eindringen von Regenwasser aus. Lufteintrittsschlitze in einer Fahrzeughaube vorzusehen ist aus dem Dokument US-A-2 175 528 bekannt.

Um einen bis auf die Lufteintrittsschlitze nach außen hin vollkommen geschlossenen Frischluftraum zu erhalten, kann der Deckelteil in seinem abgewinkelten Bereich eine Abschlußplatte aufweisen, die zusammen mit dem Mittenteil eine Aussparung zur Aufnahme einer Steuerkonsole aufweist. Um einen möglichen Wassereintritt zu vermeiden und um ein gefälliges Design zu erreichen, kann nach der Erfindung außerdem noch vorgesehen werden, daß die Seitenverkleidungen in ihrem oberen Bereich nach innen abgewinkelt sind, in einen geraden Stegteil auslaufen und in diesem Bereich von den Seitenteilen derart übergriffen werden, daß zwischen den Seitenteilen und den Seitenverkleidungen ein absatzloser Übergang entsteht. Die seitlich vorgesehenen Lufteintrittsschlitze sind damit vollständig abgedeckt.

Eine dauerhafte Sicherung der seitlichen Lufteintrittsschlitze auch gegen Beschädigung oder Verstopfung wird ferner dadurch erreicht, daß die Seitenteile im Bereich ihrer Unterkanten mit nach innen weisenden Stützteilen und die Seitenverkleidungen mit nach außen weisenden Stützteilen versehen sind, die im zusammengebauten Zustand aufeinander aufliegen.

Der Zusammenbau der Haube kann dadurch erleichtert werden, daß die Stützteile Dorne und Führungslöcher aufweisen, wobei die Dorne beim Zusammenbau die Führungslöcher erfassen. Zweckmäßig können die Stützteile lösbar miteinander verbindbar sein.

In der Zeichnung ist ein nachfolgend näher erläutertes Ausführungsbeispiel der Erfindung dargestellt. Es zeigt:

Fig. 1 einen Kompakttraktor für die Garten- und Rasenpflege mit einer Fahrzeugmotorabdeckung,

Fig. 2 die Fahrzeugmotorabdeckung nach Fig. 1 im Vertikalschnitt,

Fig. 3 die Fahrzeugmotorabdeckung vor dem Zusammenbau,

Fig. 4 einen vorderen Teil der Fahrzeugmotorabdeckung in Seitenansicht mit Führungsdornen für einen oberen Deckelteil und

Fig. 5 einen Schnitt nach der Linie 5 : 5 in Fig. 4.

Die nachfolgend beschriebene Fahrzeugmotorabdeckung eignet sich besonders gut für den Einsatz an Kompakttraktoren für die Garten- und Rasenpflege. Sie kann aber auch an anderen Fahrzeugen eingesetzt werden.

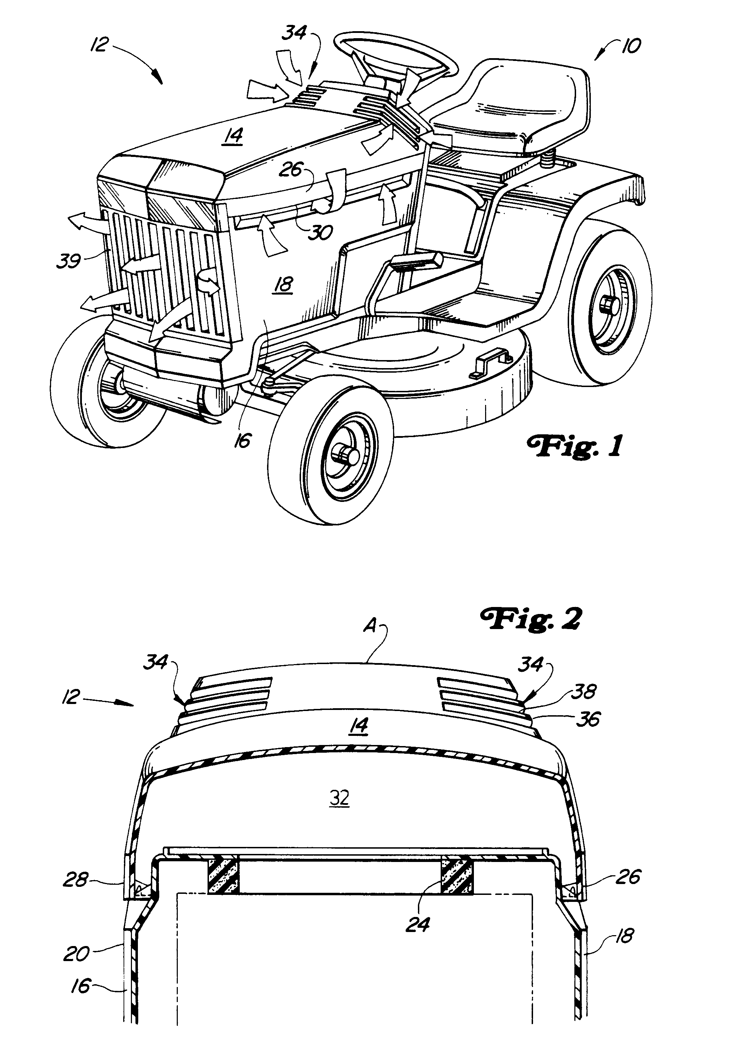

In Fig. 1 der Zeichnung ist ein Kompakttraktor 10 für die Rasenpflege dargestellt, d.h. er ist mit einem zwischen seinen Achsen angeordneten Rasenmäher ausgerüstet. Die Fahrzeugmotorabdeckung ist mit 12 bezeichnet und besteht aus einem Deckelteil 14 und einem unteren Teil 16, der Seitenverkleidungen 18 und 20 aufweist, die an ihrem oberen Ende über einen Mittenteil 22 miteinander verbunden sind. In den Mittenteil 22 ist eine Durchtrittsöffnung 24 eingearbeitet, die eine Größe aufweist, daß der Lufteinlaß für ein nicht dargestelltes Kühlsysten des Verbrennungsmotors hin- durchragen kann.

Der Deckelteil 14 ist gewölbt ausgebildet, erstreckt sich von einem abgeflachten vorderen Stirnende zu einem rückwärtigen nach oben abgewinkelten Ende und geht an seinen Seiten in Seitenteile 26 und 28 über. Diese dienen zur Verbindung mit dem unteren Teil 16. Im zusammengebauten Zustand entsteht dann zwischen dem Mittenteil 22 und dem Deckelteil 14 ein als Frischluftraum dienender Hohlraum 32, der bei geschlossener Haube bis auf Lufteintritte und die Durchtrittsöffnung 24 vollständig geschlossen ist, da der Mittenteil und das rückwärtige Ende der Haube bis zu einer Steuerkonsole reichen und hier entsprechend geformt sind, um die Steuerkonsole bündig zu umfassen.

Im zusammengebauten Zustand weisen die oberen Kanten der Seitenverkleidungen 18 und 20 zu den unteren Kanten der Seitenteile 26 und 28 einen seitlichen Abstand auf, so daß seitliche Lufteintrittsschlitze 30 entstehen. Weitere Luftschlitze 34 sind in dem rückwärtigen nach oben abgewinkelten Bereich der Haube vorgesehen. Sie bestehen aus Lufteinlaßschlitzen 38, die sich in dem hochgezogenen Deckelbereich befinden und sich bis in die Seitenteile 26 und 28 erstrecken. Zwischen den Lufteintrittsschlitzen 38 sind noch diese abdeckende Stege 36 vorgesehen. Die in den Frischluftraum eintretende Frischluft ist in Fig. 1 durch Pfeile angedeutet. Nachdem die Frischluft das Kühlsystem durchströmt hat, tritt erwärmte Luft wieder durch einen stirnseitig mit der Haube verschraubten Kühlergrill 39 aus, was ebenfalls in Fig. 1 durch Pfeile angedeutet ist. Aus Fig. 1 ist ebenfalls noch erkennbar, daß die Lufteintrittsschlitze relativ hoch über dem Boden liegen, so daß die Luft in einem sauberen Zustand angesaugt werden kann, wobei die Gefahr, daß Heißluft mitangesaugt wird, ausgeschlossen oder nahezu ausgeschlossen ist. Da die Seitenteile 26 und 28 die seitlichen Lufteintrittsschlitze 30 von oben abdecken und die Lufteintrittsschlitze 38 durch die Stege 36 geschützt sind, ist auch die Gefahr gering, daß Regenwasser in den Frischluftraum 32 gelangen könnte.

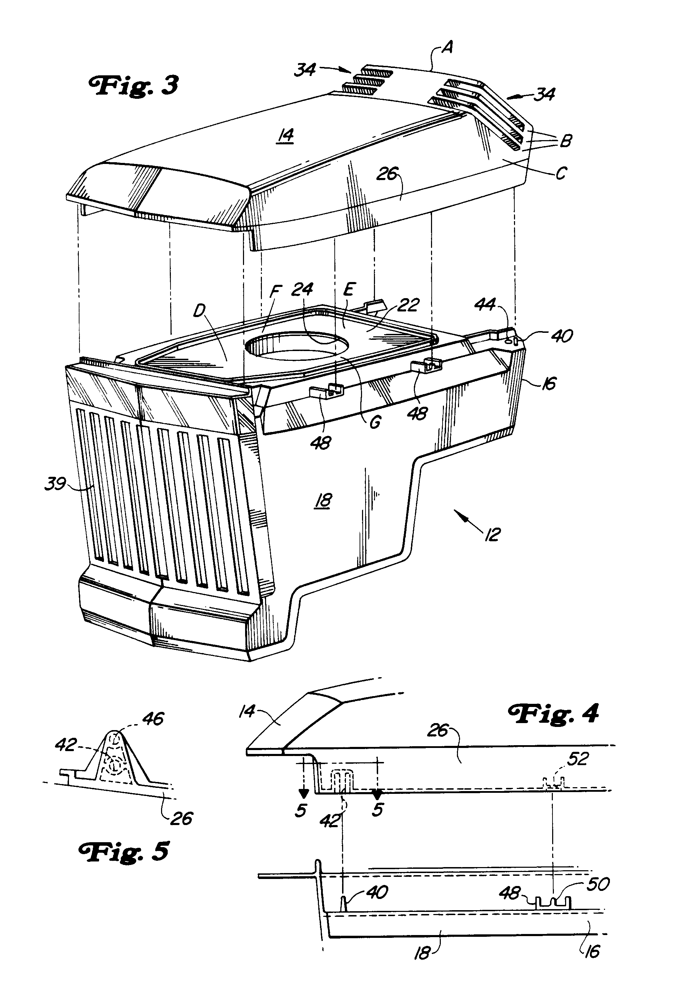

Der Deckelteil 14 und der untere Teil 16 werden an ihren Eckpunkten miteinander verbunden. Im einzelnen ist eine solche Eckverbindung in den Fig. 4 und 5 dargestellt. Aus Fig. 4 ist erkennbar, daß nach oben weisende Dorne 40 vorgesehen sind, und zwar an jedem Eckpunkt des unteren Teils 16 auf entsprechenden Stützflächen. Die Dorne 40 werden von Führungslöchern 42 in den unteren Kanten der Seitenteile 26 und 28 oder an diesen vorgesehenen und nach innen weisenden Stützteilen aufgenommen. In unmittelbarer Nähe der Dorne sind in dem unteren Teil 16 noch Schraubenlöcher 44 vorgesehen, die zu Schraubenlöchern 46 im Deckelteil 14 ausgerichtet sind, so daß beide Teile über Schrauben im zusammengesetzten Zustand miteinander verbunden werden können.

Zwischen den Eckkanten sind außerdem, wie die Fig. 3 und 4 erkennen lassen, noch im Bereich der oberen Kanten der Seitenverkleidungen 16 und 18 nach außen weisende Stützteile 48 vorgesehen, die ebenfalls mit nach oben weisenden allerdings kleineren Dornen 50 ausgerüstet sind. Diese werden im zusammengebauten Zustand von Öffnungen 52 aufgenommen, die in den unteren Kanten der Seitenteile 26 und 28 oder in nach innen weisenden Stützteilen vorgesehen sind, die an die Unterkanten der Seitenteile angeschlossen sind.

Aus Fig. 2 ist ebenfalls erkennbar, daß die Seitenverkleidungen 18 und 20 in ihrem oberen Bereich winklig nach innen abgesetzt sind und oberenends in einen kurzen seitlichen Steg auslaufen, an dessen oberen Enden sich der Mittenteil 22 anschließt. Dieser abgesetzte Bereich wird von den Seitenteilen 26 und 28 des Deckelteils 16 übergriffen und läßt dadurch im zusammengebauten Zustand die seitlichen Lufteintrittsschlitze 30 entstehen, deren Form durch die in die Führungslöcher eingreifenden Dorne auch noch nach langen Einsatzzeiten gewährleistet bleibt, auch wenn seitliche Kräfte auf die Seiten der Haube einwirken sollten. Die seitlichen Lufteintrittsschlitze sind nach unten hin offen und durch die Abwinkelung des oberen Bereichs des unteren Teils 16 können die Seitenteile 26 und 28 bündig mit den Seitenverkleidungen 16 und 18 abschließen.

Der untere Teil 16 ist in seinem vorderen unteren Bereich um eine horizontal verlaufende Achse zusammen mit dem Deckelteil 14 nach oben hochschwenkbar. Das Hochschwenken kann leicht von Hand erfolgen, da die gesamte Haube aus Kunststoff, beispielsweise Plastik, hergestellt ist und damit nicht schwer ist. Der Deckelteil 14 und der untere Teil 16 werden getrennt im Injektionsverfahren in der endgültigen Farbgebung gegossen. Bekanntlich wird bei diesem Verfahren der Kunststoff durch Einfüllöcher eingegeben, und, da Plastikkunststoff nach dem Eingeben in die Form nur eine bestimmte Distanz fließen kann, müssen bei großen Formstücken entsprechend viele Einfüllöcher vorgesehen werden, was bei herkömmlichen Hauben immer der Fall war.

An den Stellen, an denen die Plastikströme aufeinander treffen, entstehen unschöne Stellen, wie Kanten, Nähte oder Knoten. Die vorliegende Fahrzeugmotorabdeckung ist jedoch zweiteilig ausgebildet, und zwar aus einem Deckelteil 14 und aus einem unteren Teil 16, wobei der Deckelteil 14 erheblich kleiner ist als herkömmliche Hauben. Dadurch benötigt der Deckelteil 14 nur ein Einfülloch, und Gußnähte oder dergleichen, die beim Zusammenstoßen des Materials durch Einfüllen in mehrere Einfüllöcher sich bilden, können nicht entstehen. Der Deckelteil 14 kann deshalb mit nur einem Einfülloch im Bereich des rückwärtigen Lufteinlasses 34 bei A versehen sein. Von dieser Stelle fließt beim Einfüllen die Gußmasse in der Form bis zur Stirnseite und auch nach unten und rückwärts, wo die Lufteinlaßschlitze 38 entstehen. Die Gießmasse wird auch in den Teil der Form gelangen, in der die Stege 36 geformt werden. Hier wird sich die Gußmasse in mehrere Teilströme aufteilen, und zwar jeweils für einen Steg. Im Bereich des Punktes B werden die einzelnen Gießströme wieder aufeinander treffen, um dort den Bodenteil zu bilden. Beim Aufeinandertreffen der Gießströme im Bereich B werden dort Gußnähte entstehen. Dies ist aber keine prominente Stelle an der Haube, und die Gußnähte stören deshalb hier nicht das äußere Erscheinungsbild. Gußnähte können eventuell auch im Bereich der Stelle C entstehen, wenn Gießmaterial, das die Stege 36 gebildet hat, nach vorne entlang der Seitenteile 26 und 28 strömt und mit dem Gießmaterial, das von der Stelle A direkt zu Stirnseite geflossen ist, zusammentrifft. Diese Gußnähte sind aber relativ klein, da der Bereich des Deckelteils 14 zwischen dem Lufteinlaß 34 und den unteren Kanten der Seitenteile 26 und 28 relativ klein ist. Im Ganzen gesehen, werden damit lange und störende Gußnähte beim Deckelteil 14 vermieden. Die dennoch entstehenden kleinen Gußnähte fallen kaum auf und befinden sich an Stellen, die nicht unbedingt ins Auge fallen.

Der untere Teil wird auch im Injektionsverfahren mit der endgültigen Farbgebung gespritzt. Er weist nur am Mittenteil 22 Einfüllöcher an den Stellen D und E auf. Gußnähte werden an den Stellen F und G entstehen, an denen die Gußströme aufeinandertreffen. Im zusammengebauten Zustand und insbesondere bei geschlossener Haube sind diese Gußnähte nicht sichtbar und stören deshalb nicht das äußere Erscheinungsbild der Haube. Die Gußnähte in dem unteren Teil 16 erstrecken sich nach außen in Richtung auf die Seitenverkleidungen 18 und 20 zu ohne diese jedoch an Stellen zu erreichen, die im zusammengebauten Zustand von außen sichtbar sind. Die von den Stellen E und F ausgehenden Gießströme werden sich nämlich vereinigen, bevor sie in Bereiche vorstoßen, die von außen nach dem Zusammenbau sichtbar sind.

Da der untere Teil 16 und der Deckelteil 14 bereits in der endgültigen Farbgebung gegossen werden, ist ein nachträgliches Farbspritzen der Haube nicht mehr erforderlich. Nach dem Gießen werden der untere Teil 16 und der Deckelteil 14 zusammengesetzt. Die Führungslöcher 42 an den Eckkanten im Deckelteil 14 sind zu den Dornen 40 am unteren Teil 16 ausgerichtet. Die Dorne 40 an den Eckkanten sind länger als die übrigen Dorne 50 und werden bereits von den Führungslöchern 42 an den Eckkanten erfasst, bevor die übrigen Dorne 50 von ihren zugehörigen Löchern 52 erfasst werden. Damit dienen die an den Eckkanten vorgesehenen Dorne 40 zur Ausrichtung und zur Führung beim Zusammenbau. Sobald der Deckelteil 14 und der untere Teil 14 gegeneinander anliegen, kann die Verschraubung vermittels durch die Schraubenlöcher 44 und 46 gesteckter Schrauben erfolgen.

Im Einsatz wird Frischluft durch die seitlichen und die rückwärtigen Lufteinlaßschlitze 30 und 38 in den Frischluftraum eingesaugt und gelangt auf Grund der Durchtrittsöffnung 24 im Mittenteil 22 in das Kühlsystem. Erhitzte Luft wird durch den Kühlergrill 39, der ebenfalls aus Kunststoff hergestellt sein kann - jedoch als gesondertes Teil - wieder austreten. Die Lufteintrittsschlitze sind relativ hoch über dem Erdboden angeordnet, so daß die eingesaugte Luft auch sauber ist. Die Lufteinlaßschlitze bilden in ihrer Gesamtheit einen großen Lufteinlaß, so daß die Geschwindigkeit der eingesaugten Luft gering ist. Größere und schwerere Partikel werden deshalb nicht miteingesaugt. Die eingesaugte Luft ist damit noch reiner. Die Frischluftkammer befindet sich über dem Motorraum und verhindert damit, daß Frischluft mit heißen Motorteilen in Berührung kommen könnte. Die Frischluft bleibt damit kühl, wodurch die Leistung des Kühlsystems verbessert wird. Zusätzliche Kanalisierungsmittel für die Frischluft sind nicht erforderlich.

Der Deckelteil 14 als Einzelstück ist nicht verwindungssteif. Im zusammengebauten Zustand wird jedoch infolge des unteren Teils 16 eine ausreichende Steifigkeit erzielt, was insbesondere beim Öffnen und Schließen der Haube von Bedeutung ist.

**Patentansprüche**

1. Fahrzeugmotorabdeckung, die eine um eine horizontale Achse aufklappbare Haube (12) mit einem Deckelteil (14) aufweist, der einstückig in vertikal oder etwa vertikal verlaufende Seitenteile (26, 28) übergeht, wobei mit Abstand zu dem Deckelteil (14) und unter diesem ein horizontal verlaufender und eine Durchtrittsöffnung (24) aufweisender Mittenteil (22) und zwei einen Fahrzeugmotor seitlich abdeckende Seitenverkleidungen (18 und 20) vorgesehen sind, die in ihrem oberen Bereich mit dem unteren Bereich der Seitenteile (26, 28) des Deckelteils (14) seitliche Lufteintrittsschlitze (30) bilden, dadurch gekennzeichnet, daß der Mittenteil (22) und die Seitenverkleidungen aus Kunststoff bestehen, einstückig ausgebildet und mit den Seitenteilen (26, 28) des Deckelteils (14) lösbar verbunden sind, wobei der Mittenteil (22) eine derartige Form aufweist, daß er den Motorraum vollständig abdeckt.

2. Fahrzeugmotorabdeckung nach Anspruch 1, dadurch gekennzeichnet, daß der Deckelteil (14) aus Kunststoff hergestellt ist.

3. Fahrzeugmotorabdeckung nach Anspruch 1 oder 2, dadurch gekennzeichnet, daß Deckelteil (14) an seinem der Stirnseite abgelegenem Ende nach oben abgewinkelt ist und in diesem abgewinkelten Bereich mit durch Stege (36) geschützten Lufteinlaßschlitzen (38) versehen ist, die sich bis in die angeformten Seitenteile (26, 28) erstrecken.

4. Fahrzeugmotorabdeckung nach Anspruch 3, dadurch gekennzeichnet, daß der Deckelteil (14) in seinem abgewinkelten Bereich eine Abschlußplatte aufweist, die zusammen mit dem Mittenteil (22) eine Aussparung zur Aufnahme einer Steuerkonsole aufweist.

5. Fahrzeugmotorabdeckung nach einem oder mehreren der vorherigen Ansprüche, dadurch gekennzeichnet, daß die Seitenverkleidungen (18 und 20) in ihrem oberen Bereich nach innen abgewinkelt sind, in einen geraden Stegteil auslaufen und in diesem Bereich von den Seitenteilen (26 und 28) derart übergriffen werden, daß zwischen den Seitenteilen (26, 28) und den Seitenverkleidungen ein absatzloser Übergang entsteht.

6. Fahrzeugmotorabdeckung nach Anspruch 5, dadurch gekennzeichnet, daß die Seitenteile (26, 28) im Bereich ihrer Unterkanten mit nach innen weisenden Stützteilen und die Seitenverkleidungen (18 und 20) mit nach außen weisenden Stützteilen (48) versehen sind, die im zusammengebauten Zustand aufeinander aufliegen.

7. Fahrzeugmotorabdeckung nach Anspruch 6, dadurch gekennzeichnet, daß die Stützteile Dorne (40 bzw. 50) und Führungslöcher (42) aufweisen.

8. Fahrzeugmotorabdeckung nach Anspruch 6, dadurch gekennzeichnet, daß die Stützteile lösbar miteinander verbindbar sind.

**Fig. 1**

**Fig. 2**

Fig. 3

Fig. 4

Fig. 5

**Europäisches Patentamt**

# EUROPÄISCHER RECHERCHENBERICHT

Nummer der Anmeldung

**EP 91 11 1704**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-1 530 907   (INTERNATIONAL HARVESTER COMPANY) <br> * Anspruch 1; Abbildungen * * <br> – – – | 1,2,5 | B 60 K 11/08 <br> B 62 D 25/10 |
| Y | US-A-4 571 193   (TAKADA ET AL.) <br> * Spalte 3, Zeile 28 - Spalte 5, Zeile 22; Abbildungen * * | 1,2,5 | |
| A | | 6,8 | |
| | – – – | | |
| D,A | US-A-3 987 766   (WELCK) <br> * das ganze Dokument * * <br> – – – | 1 | |
| A | US-A-3 884 322   (NEMSCHOFF) <br> * das ganze Dokument * * <br> – – – | 1,3 | |
| A | PATENT ABSTRACTS OF JAPAN vol. 7, no. 257 (M-256)(1402) 16. November 1983 <br> & JP-A-58 139 877 ( KUBOTA TEKKO K.K. ) 19. August 1983 <br> * Zusammenfassung * * <br> – – – | 1,4 | |
| P,A | US-A-4 952 180   (WATANABE ET AL.) <br> * Spalte 2, Zeile 57 - Spalte 4, Zeile 14; Abbildungen * * <br> – – – – – | 1,2,5-8 | **RECHERCHIERTE SACHGEBIETE (Int. Cl.5)** <br><br> B 60 R <br> B 60 K <br> B 62 D <br> F 02 B <br> F 02 M |

Der vorliegende Recherchenbericht wurde für alle Patentansprüche erstellt

| Recherchenort | Abschlußdatum der Recherche | Prüfer |
|---|---|---|
| Den Haag | 31 Oktober 91 | DUBOIS B.F.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

-----------------------------------------------

& : Mitglied der gleichen Patentfamilie, übereinstimmendes Dokument